# EUROPÄISCHE PATENTSCHRIFT

(11) **EP 0 676 434 B1**
(45) Veröffentlichungstag und Bekanntmachung des Hinweises auf die Patenterteilung: **09.09.1998**
(21) Anmeldenummer: 95104610.1
(22) Anmeldetag: 29.03.1995
(51) Int. Cl.: C08G 18/76, C08G 18/48, C08G 18/10

(54) **Verfahren zur Herstellung von fluorchlorkohlenwasserstoff freien, hochelastischen Polyurethan-Weichschaumstoffen und hierfür verwendbare, mit Urethangruppen modifizierte Polyisocyanatmischungen auf Diphenylmethan-diisocyanatbasis**
Process for the preparation of highly elastic, flexible polyurethane foams devoid of fluorochlorohydrocarbons and urethane groups modified polyisocyanate mixtures based on diphenylmethane diisocyanate suitable therefor
Procédé de préparation de mousses de polyuréthanes flexibles à grande élasticité sans hydrocarbures chlorofluorés, et mélanges de polyisocyanates à base de diisocyanate de diphénylméthane modifiés par des groupes d'uréthane utilisables dans ce procédé

(30) Priorität: 06.04.1994 DE 4411781
(43) Veröffentlichungstag der Anmeldung: 11.10.1995
(73) Patentinhaber: BASF Aktiengesellschaft, 67063 Ludwigshafen (DE)
(72) Erfinder: Lutter, Heinz-Dieter, Dr., D-69151 Neckargemünd (DE); Zschiesche, Ruth, Dr., D-68199 Mannheim (DE); Mertes, Jürgen, Dr, D-67122 Altrip (DE); Bruchmann, Bernd, Dr., D-67069 Ludwigshafen (DE); Pittrich, Klaus, D-82211 Herrsching (DE); Brandt, Peter, Dr., D-67059 Ludwigshafen (DE)

(56) Entgegenhaltungen:
- EP-A- 0 344 551
- EP-A- 0 422 811
- GB-A- 2 109 803

## Beschreibung

Gegenstände der Erfindung sind ein Verfahren zur Herstellung von Fluorchlorkohlenwasserstoff (FCKW) freien, hochelastischen Polyurethan (PU)-Weichschaumstoffen und Weichformschaumstoffen durch UUmsetzung der an sich bekannten Ausgangsstoffe, jedoch unter Verwendung spezieller, flüssiger, mit Urethangruppen modifizierter Polyisocyanatmischungen auf Diphenylmethan-diisocyanat (MDI)-basis mit einem Isocyanatgehalt von 22 bis 30 Gew.-%, die ihrerseits hergestellt werden durch Umsetzung einer Mischung aus Diphenylmethan-diisocyanaten und Polyphenyl-polymethylen-polyisocyanaten mit einem Gehalt an Diphenylmethan-diisocyanat-Isomeren von 55 bis 99 Gew.-%, bezogen auf das Gesamtgewicht, mit mindestens einem trifunktionellen Polyoxypropylen-polyol mit einer Hydroxylzahl von 20 bis 60 und derartige flüssige, Urethangruppen gebunden enthaltende Polyisocyanatmistchungen.

Die Herstellung von elastischen PU-Weichformschaumstoffen durch Umsetzung von höhermolekularen Polyhydroxylverbindungen, vorzugsweise von Polyester- oder Polyether-polyolen, und gegebenenfalls Kettenverlängerungs- und/oder Vernetzungsmitteln mit organischen oder/und modifizierten organischen Polyisocyanaten ist bekannt und wird in zahlreichen Patent- und Literaturveröffentlichungen beschrieben.

Beispielhaft genannt seien das Kunststoff-Handbuch, Band VII, Polyurethane, Carl Hanser Verlag, München, 1. Auflage, 1966, herausgegeben von Dr. R. Vieweg und Dr. A Höchtlen, und 2. Auflage, 1983, herausgegeben von Dr. G. Oertel.

Durch geeignete Wahl der Aufbaukomponenten und ihrer Mengenverhältnisse können PU-Weichschaumstoffe mit sehr guten mechanischen, Eigenschaften, insbesondere mit einer hohen Reißfestigkeit und hohen Stauchhärte, erhalten werden.

Nach Angaben der DE-C-1520737 (US-A-3 336 242) können PU-schaumstoffe mit offener Zellstruktur hergestellt werden nach einem einstufigen Verfahren durch Umsetzung von Polyisocyanaten mit Polyoxypropylen-polyoxyethylen-triolen mit Molekulargewichten von 3000 bis 8000, die als Endblock 3 bis 5 Gew.-% Ethylenoxid und als Startermolekül Glycerin gebunden enthalten.

Sehr weiche PU-Schaumstoffe erhält man nach GB-A-1 079 105 aus einem Polyether-polyol oder einer -mischung mit einer Hydroxylzahl von 70 bis 170, die enthält ein trifunktionelles Polyoxy-alkylen-polyol, wie z.B. oxpropyliertes Glycerin und bis zu 40 Gew.-% eines Polyoxyalkylen-glykols z.B. oxpropyliertes Ethylenglykol, und einem organischen Polyisocyanat, bevorzugt Toluylen-diisocyanat (TDI), in Gegenwart von Wasser und einem Fluorchlorkohlenwasserstoff, vorzugsweise Trichlorfluormethan, als Treibmittel.

Flexible PU-Schaumstoffe werden ferner in der GB-A-1 064 576 beschrieben. Nach Angaben dieser Patentschrift werden organische Diisocyanate, vorzugsweise TDI, mit einer Mischung aus 50 bis 90 Gew.-% eines Polyoxyalkylen-triols mit einer Hydroxylzahl von 30 bis 170 und 10 bis 50 Gew.-% eines Polyoxyalkylen-diols mit einer Hydroxylzahl von 40 bis 110, wobei die Mischung einen Gehalt an primären Hydroxylgruppen von 10 bis 65 % besitzt, in Gegenwart von Wasser zur Reaktion gebracht.

Nach GB-A-2 109 803 können hochelastische Polyurethanschäume aus einem hochmolekularen Polyetherpolyol mit einem Molekulargewicht von 5000 bis 10 000 und Diphenylmethandiisocyanat (MDI) oder Präpolymeren aus MDI und Polyoxyalkylendiolen oder -triolen erhalten werden. Das hochmolekulare Polyetherpolyol wird durch Umsetzung eines Polyoxyalkylenpolyols mit einer polyfunktionellen hydroxyl-reaktiven Verbindung, wie aliphatischen Dicarbonsäuren oder aromatischen Diisocyanaten hergestellt.

Bekannt ist auch die Herstellung von bei Raumtemperatur flüssigen Diphenylmethan-diisocyanat-Zusammensetzungen.

Nach Angaben der DE-C-16 18 380 (US-A-3 644 457) werden hierzu ein Mol 4,4'- und/oder 2,4'-MDI mit 0,1 bis 0,3 Mol Tri-1,2-oxypropylen-glykol und/oder Poly-1,2-oxypropylen-glykol mit einem Molekulargewicht bis 700 zur Reaktion gebracht.

Gemäß GB-A-1 369 334 wird die Modifizierung in zwei Reaktionsstufen durchgeführt und als Modifizierungsmittel Dipropylenglykol oder Polyoxypropylen-glykol mit einem Molekulargewicht unter 2000 verwendet.

Die DE-A-29 13 126 (US-A-4 229 347) beschreibt MDI-Zusammensetzungen, in denen 10 bis 35 Gew.-% der Isocyanatgruppen mit einem Gemisch aus mindestens 3 Alkylenglykolen umgesetzt werden und wobei eines dieser Glykole Di-, Tri- oder ein höhermolekulares Polypropylen-glykol ist.

In der DE-A-24 04 166 (GB-A-1 430 455) werden hingegen als Modifizierungsmittel Gemische aus einem Polyoxyethylen-glykol oder Polyoxyethylen-glykolgemisch mit einem durchschnittlichen Molekulargewicht kleiner als 650 und mindestens einem Alkylenglykol mit mindestens 3 C-Atomen genannt.

Die DE-A-23 46 996 (GB-A-1 377 676) betrifft MDI-Zusammensetzungen, bei denen 10 bis 35 Gew.-% der Isocyanatgruppen mit einem handelsüblichen Polyoxyethylen-glykol umgesetzt wurden.

Zur Herstellung von flüssigen Polyisocyanat-Zusammensetzungen wurde neben MDI und Glykolen und/oder Polyoxyalkylenglykolen zusätzlich auch die Mitverwendung von Mischung aus MDI und Polyphenyl-polymethylen-polyisocyanaten (Roh-MDI) beschrieben.

Nach der EP-A-10 850 besteht eine derartige Polyisocyanat-Zusammensetzung aus einem mit Polyoxyalkylen-polyolen mit einer Funktionalität von 2 bis 3 auf Basis von Polyoxypropylen-polyol und gegebenenfalls Polyoxyethylen-polyol mit Molekulargewichten von 750 bis 3000 modifiziertem MDI im Gemisch mit Roh-MDI.

Eine flüssige Roh-MDI-Zusammensetzung wird nach der DE-B-27 37 338 (US-A-4 055 548) durch Vereinigen von Roh-MDI mit einem Polyoxyethylen-glykol mit einem durchschnittlichen Molekulargewicht von 200 bis 600 erhalten.

Nach Angaben der DE-B-26 24 526 (GB-A-1 550 325) wird ein nach einem speziellen Verfahren hergestelltes Roh-MDI mit 88 bis 95 Gew.-% MDI mit Polyoxypropylen-glykol des Molekulargewichtsbereichs 134 bis 700 umgesetzt.

Die DE-A-25 13 796 (GB-A-1 444 192) und DE-A-25 13 793 (GB-A-1 450 660) betreffen Roh-MDI-Zusammensetzungen, bei denen das Roh-MDI mit Alkylen- oder Polyoxyalkylen-glykolen in bestimmten Mengen modifiziert wurde.

Die genannten Alkylen- oder Polyoxyalkylen-glykole bewirken zwar eine Verflüssigung der bei 42° bzw. 28°C schmelzenden 4,4'- bzw. 2,4'-MDI-Isomeren. Nachteilig ist jedoch, daß die Polyisocyanat-Zusammensetzungen bei Temperaturen um 10°C nach längeren Lagerzeiten kristalline Ausscheidungen zeigen.

Es ist ferner bekannt, PU-Weichschaumstoffe unter Verwendung von mit Urethangruppen modifizierten Roh-MDI-Zusammensetzungen als Polyisocyanatkomponente herzustellen.

Nach Angaben der EP-A-22 617 wird hierbei ein di- bis trifunktionelles Polyoxypropylen-polyoxyethylen-polyol mit einem Gehalt an polymerisierten Oxyethylengruppen von mindestens 50 Gew.-% mit einer Mischung aus MDI-Isomeren zur Reaktion gebracht und das erhaltene Quasiprepolymer anschließend mit Roh-MDI verdünnt. Nachteilig an den beschriebenen PU-Schaumstoffen ist insbesondere die geringe Zug- und Weiterreißfestigkeit.

Mit Urethangruppen modifizierte Polyisocyanatmischungen auf Basis von Roh-MDI mit einem Gehalt an NCO-Gruppen von 12 bis 30 Gew.-% werden auch in der EP-B-0 111 121 (US-A-4 478 960) beschrieben. Zur Modifizierung des MDI oder Roh-MDI wird ein Polyoxypropylen-polyoxyethylen-polyol mit einer Funktionalität von 2 bis 4, einer Hydroxylzahl von 10 bis 65 und einem Gehalt an polymerisierten Ethylenoxideinheiten von 5 bis 30 Gew.-% eingesetzt. Unter Verwendung dieser mit Urethangruppen modifizierten Polyisocyanatmischungen können PU-Schaumstoffe mit einer erhöhten Reißdehnung sowie verbesserten Zug- und Weiterreißfestigkeit hergestellt werden. Nachteilig an diesen PU-Schaumstoffen ist lediglich, daß zu ihrer Herstellung Fluorchlorkohlenwasserstoffe als Treibmittel verwendet werden.

Isocyanatgruppen aufweisende Prepolymere, hergestellt aus 4,4'-MDI enthaltenden Polyisocyanatmischungen und Polyoxyalkylenpolyolen mit einer durchschnittlichen Funktionalität von 2 bis 4, einem Hydroxyläquivalentgewicht von 2200 bis 3500 und einem Gehalt an Oxyethyleneinheiten von 40 bis 68 Gew.-%, finden nach Angaben der EP-A-0 485 953 Verwendung zur Herstellung von flexiblen PU-Schaumstoffen mit einer verbesserten Reißdehnung.

Nach EP-A-0 344 551 werden flüssige, Urethangruppen enthaltende Polyisocyanatmischungen mit einem NCO-Gehalt von 15 bis 30 Gew.-% durch Umsetzung von Polyisocyanaten der MDI-Reihe mit unterschüssigen Mengen von Polyetherpolyolen eines mittleren Hydroxyläquivalentgewichtes von 5000 bis 3000 und einer mittleren Hydroxylfunktionalität von größer als 4 erhalten. Die PolyisocyanatmIschungen finden Verwendung bei der Hersteliung von Polyurethanweischschaumstoffen.

Die EP-A-0 555 742 beschreibt ein Verfahren zur Herstellung von FCKW freien PU-Weichschaumstoffen unter Verwendung einer flüssigen, Urethangruppen gebunden enthaltenden Polyisocyanatmischung mit einem Gehalt an NCO-Gruppen vor 20 bis 30 Gew.-%, die ihrerseits hergestellt wird durch Umsetzung von Roh-MDI mit einer Polyether-polyolmischung mit einer Hydroxyzahl von 25 bis 120, die besteht aus mindestens einem Polyoxypropylen-glykol und mindestens einem trifunktionellen Polyoxypropylen-polyoxy-ethylen-polyol mit einem Gehalt an Ethylenoxideinheiten von 90 bis 10 Gew.-%. Die unter Verwendung dieser, mit Urethangruppen modifizierten Polyisocyanatmischungen hergestellten PU-Weich (form) schaumstoffe besitzen ein hohes mechanisches Eigenschaftsniveau, wobei je nach Art der Herstellung der Urethangruppen enthaltenden Polyisocyanatmischungen schäumfähige Reaktionsmischungen mit einem besseren Fließverhalten oder PU-Weichschaumstoffe mit einer geringen Zugfestigkeit und Dehnung und dafür verbesserten Druckverformungsrest und Stauchhärte erhalten werden können.

Weichelastische FCKW-freie PU-(Form)schaumstoffe mit geringer Dichte können nach Angaben der EP-A-0 557 792 hergestellt werden durch Umsetzung der an sich bekannten Ausgangsstoffe, jedoch unter Verwendung einer flüssigen, mit Urethangruppen modifizierten Polyisocyanatmischung auf MDI-Basis mit einem Isocyanatgehalt von 22 bis 30 Gew.-%, die ihrerseits hergestellt werden durch Umsetzung von Roh-MDI mit mindestens einem Polyoxypropylen-polyoxyethylen-polyol mit einer Funktionalität von 2,5 bis 3,5, einer Hydroxylzahl von 50 bis 90 und einem Gehalt an polymerisierten Ethylenoxidgruppen von mehr als 30 bis weniger als 50 Gew.-%, bezogen auf das Gewicht der Alkylenoxidgruppen.

Urethangruppenhaltige Polyisocyanatmischungen dieser Art sind mit anderen Aufbaukomponenten zur Herstellung von PU-Weichschaumstoffen gut verträglich und mit polaren oder unpolaren Treibmitteln, insbesondere Wasser und/oder Carbonsäuren, gut mischbar. Die genannten, mit unterschiedlich strukturierten Polyether-polyolen oder -polyolmischungen modifizierten, Urethangruppen enthaltenden Polyisocyanatmischungen auf MDI-Basis eignen sich zur gezielten Verbesserung mindestens einer speziellen mechanischen Eigenschaft des hergestellten PU-Weich(form)schaumstoffes. Die genannten Veröffentlichungen enthalten jedoch keine Hinweise bezüglich einer Erhöhung der Elastizität oder einer Verbesserung des Sitzkomforts des PU-Weich (form)schaumstoffs.

Flüssige, helle Polyisocyanatmischungen auf MDI-Basis und ihre Verwendung bei der Herstellung von hellen, zähen und harten PU-Schaumstoffen werden beschrieben in der EP-A-0 550 901.

Zur Herstellung des Prepolymeren finden Roh-MDI Verwendung mit einem Anteil von 75 bis 95 Gew.-% an MDI-Isomeren, wobei der Anteil an 2,4'-MDI 15 bis 40 Gew.-% und an 2,2'-MDI 2 bis 10 Gew.-% beträgt, und 5 bis 25 Gew.-% polymeren Isocyanaten der MDI-Reihe und Polyether-polyole mit einer Funktionalität von 3 bis 8 und einer Hydroxylzahl von 350 bis 1000 mg KOH/g.

PU-Weich(form)schaumstoffe mit einem hohen Sitzkomfort konnten bisher nur unter Verwendung von 2,4- und 2,6-Toluylen-diisocyanat(TDI)-Isomerenmischungen hergestellt werden.

Die Aufgabe der vorliegenden Erfindung bestand darin, PU-Weichschaumstoffe, vorzugsweise PU-Weichformschaumstoffe aus MDI-haltigen Polyisocyanatmischungen herzustellen, die zum einen hochelastisch sind und zum anderen einen sehr hohen, mit PU-Weichschaumstoffen aus TDI vergleichbaren Sitzkomfort besitzen. Die PU-Weich(form)schaumstoffe sollten insbesondere als Polstermaterialien, bevorzugt im Automobilbereich, Verwendung finden.

Diese Aufgabe konnte überraschenderweise gelost werden durch die Verwendung einer mit Urethangruppen modifizierten Polyisocyanatmischung auf MDI-Basis als Polyisocyanatkomponente und Wasser als insbesondere bevorzugtes Treibmittel bei der PU-Weichschaumstoffherstellung.

Gegenstand der Erfindung ist somit ein Verfahren zur Herstellung von FCKW freien, hochelastischen PU-Weichschaumstoffen und PU-Weichformschaumstoffen durch Umsetzung von
A) flüssigen, Urethangruppen gebunden enthaltenden Polyisocyanatmischungen auf Diphenylmethan-diisocyanatbasis mit
B) höhermolekularen Polyhydroxylverbindungen und
C) gegebenenfalls niedermolekularen Kettenverlängerungsmitteln und/oder Vernetzungsmitteln
in Gegenwart von
D) Treibmitteln,
E) Katalysatoren
sowie gegebenenfalls
F) Zusatzstoffen,
das dadurch gekennzeichnet ist, daß die flüssigen, Urethangruppen gebunden enthaltende Polyisocyanatmischungen (A) einen Gehalt an NCO-Gruppen von 22 bis 30 Gew.-%, bezogen auf das Gesamtgewicht, besitzen und erhalten werden durch Umsetzung
a) einer Mischung (a) aus Diphenylmethan-diisocyanaten und Polyphenyl-polymethylen-polyisocyanaten mit einem Gehalt an Diphenylmethan-diisocyanat (MDI)-Isomeren von 55 bis 99 Gew.-%, bezogen auf das Gesamtgewicht der Mischung (a), mit
b) mindestens einem trifunktionellen Polyoxypropylen-polyol (b) mit einer Hydroxylzahl von 20 bis 60.

Gegenstand der Erfindung sind ferner die für das erfindungsgemäße Verfahren zur Herstellung der FCKW freien PU-Wieich(form)schaumstoffe verwendbaren flüssigen, mit Urethangruppen modifizierten Polyisocyanatmischungen auf Diphenylmethan-diisocyanatbasis mit einem Gehalt an NCO-Gruppen von 22 bis 30 Gew.-%, die erhältlich sind durch Umsetzung
a) einer Mischung (a) aus Diphenylmethan-diisocyanaten und Polyphenyl-polymethylen-polyisocyanaten mit einem Gehalt an Diphenylmethan-diisocyanat(MDI)-Isomeren von 55 bis 99 Gew.-%, bezogen auf das Gesamtgewicht der Mischung (a), mit
b) mindestens einem trifunktionelle Polyoxypropylen-polyol (b) mit einer Hydroxylzahl von 20 bis 60.

Die nach dem erfindungsgemäßen Verfahren unter Verwendung der speziellen, mit Urethangruppen modifizierten Polyisocyanatmischungen (A) hergestellten PU-Weich(form)schaumstoffe sind hochelastisch und besitzen einen, mit PU-Weichschaumstoffen auf TDI-Basis vergleichbaren sehr hohen Sitzkomfort, ausgedrückt durch die hohe Rückprallelastizität (= Resilience) und gemessen mit Hilfe des Ball-Rebound-Tests nach ASTM D 3574-86. Sie zeichnen sich ferner durch eine hohe Anzahl an offenen Zellen und große Anfangsreißfestigkeit (greenstrength) aus. Vorteilhaft ist auch, daß sich die schaumfähigen Reaktionsmischungen aufgrund der guten Verträglichkeit der erfindungsgemäßen flüssigen, Urethangruppen gebunden enthaltenden Polyisocyanatmischung (A) mit den anderen Aufbaukomponenten auf verschiedenartigen schäumvorrichtungen problemlos verarbeiten lassen. Die schaumfähigen Reaktionsmischungen sind sehr gut fließfähig.

Zur Herstellung der neuen, flüssigen Urethangruppen gebunden enthaltenden Polyisocyanatmischungen auf MDI-Basis (A) und zu den für das erfindungsgemäßen Verfahren zur Herstellung der FCKW freien PU-Weich(form)schaumstoffe verwendbaren anderen Aufbaukomponenten (B) bis (F) ist im einzelnen folgendes auszuführen:

Zur Herstellung der flüssigen, Urethangruppen gebunden enthaltenden Polyisocyanatmischungen (A) mit einem Gehalt an NCO-Gruppen von 22 bis 30 Gew.-%, vorzugsweise von 24 bis 30 Gew.-% und insbesondere 26 bis 29 Gew.-%, finden vorteilhafterweise die folgenden MDI-haltigen Polyisocyanatmischungen Verwendung:

Geeignete Mischungen (a) aus Diphenylmethan-diisocyanaten und Polyphenyl-polymethylen-polyisocyanaten, üblicherweise Roh-MDI genannt, besitzen neben höheren Homologen einen Gehalt an MDI-Isomeren von 55 bis 99 Gew.-%, vorzugsweise von 67 bis 98 Gew.-%. Vorzüglich bewährt haben sich Mischungen (a) aus Roh-MDI, die enthalten oder vorzugsweise bestehen aus, bezogen auf das Gesamtgewicht der Mischung (a), wobei sich die Gew.-% von (al) bis (a4) zu 100 Gew.-% addieren,
a1) 45 bis 65 Gew.-%, vorzugsweise 47 bis 60 Gew.-%, 4,4'-MDI,
a2) 10 bis 50 Gew.-%, vorzugsweise 15 bis 45 Gew.-% 2,4'-MDI,
a3) 0 bis 1 Gew.-%, vorzugsweise 0,1 bis 0,4 Gew.-% 2,2'-MDI und
a4) 45 bis 1 Gew.-%, vorzugsweise 33 bis 2 Gew.-%, insbesondere 28 bis 7 Gew.-%, mindestens trifunktionelle Polyphenyl-polymethylen-polyisocyanate.

Zur Herstellung der erfindungsgemäßen flüssigen, Urethangruppen enthaltenden Polyisocyanatmischungen (A) werden bevorzugt Polyisocyanatmischunge (a) aus MDI-Isomeren und Polyphenyl-polymethylen-polyisocyanaten (Roh-MDI) verwendet, die bereits aufgrund der gewählten Ausgangsstoffe und Reaktionsbedingungen zu ihrer Herstellung, einen MDI-Isomerengehalt von 55 bis 99 Gew.-%, vorzugsweise von 67 bis 98 Gew.-%, bezogen auf das Gesamtgewicht der Mischung (a) besitzen, wobei solche Roh-MDI mit einem 4,4'-MDI-Gehalt von 45 bis 65 Gew.-%, vorzugsweise von 47 bis 60 Gew.-% und einem 2,4'-MDI-Gehalt von 10 bis 50 Gew.-%, vorzugsweise von 15 bis 45 Gew.-%, bezogen auf das Gesamtgewicht der Mischung (a) insbesondere bevorzugt sind.

Stehen derartige Roh-MDI nicht zur Verfügung, sondern z.B. nur solche, mit einem höheren Gehalt an mindestens trifunktionellen Polyphenyl-polymethylen-polyisocyanaten, so können diese mit Mischungen aus MDI-Isomeren ocer 4,4'-MDI und/oder 2,4'-MDI in den erforderlichen Mengen gemischt werden. Hierfür geeignete Mischungen aus MDI-Isomeren enthalten zweckmäßigerweise cder bestehen vorzugsweise, bezogen auf das Gesamtgewicht der MDI-Isomerenmischung, aus
90 bis 48 Gew.-%, vorzugsweise 77,5 bis 50 Gew.-% 4,4'-MDI,
10 bis 48 Gew.-%, vorzugsweise 20 bis 50 Gew.-% 2,4'-MDI und
0 bis 4 Gew.-%, vorzugsweise C bis 2,5 Gew.-% 2,2'-MDI.

In analoger weise können auch Mischungen aus MDI-Isomeren mit mindestens trifunktionellen Polyphenyl-polymethylen-polyIsocyanaten und/oder Roh-MDI mit einem relativ hohen Gehalt, z.3. von mehr als 45 Gew.-%, vorzugsweise vcn 45 bis 65 Gew.-%, an mindestens trifunktionellen Polyphenyl-polymethylen-polyisocyanaten zur Erzielung geeigneter Mischungen (a) abgemischt werden.

Die erfindungsgemäß als Modifizierungsmittel verwendbaren trifunktionellen Polyoxypropylen-polyole (b) besitzen eine Hydroxylzahl von 20 bis 60, vorzugsweise von 26 bis 44. Sie können beispielsweise hergestellt werden durch Propoxylierung einer Startermolekülmischung mit einer durchschnittlichen Funktionalität von 3 oder vorzugsweise von Triolen in Gegenwart von basischen Katalysatoren. Geeignete Startermolekülmischungen mit einer Funktionalität von 3 können bestehen z.B. aus tetrafunktionellen Alkoholen und Alkandiolen, Dialkylenglykolen und/ oder Wasser.

Geeignete Triole sind beispielsweise cycloaliphatische Triole, wie z.B. Cyclohexantriol-Isomerengemische, oder vorzugsweise aliphatische Triole, wie z.B. Trimethylolpropan und insbesondere Glycerin sowie Mischungen aus Trimethylpropan und Glycerin.

Gebräuchliche basische Katalysatoren sind z.B. Alkalialkoxide mit 1 bis 4 Kohlenstoffatomen im Alkylrest, wie Natriummethylat, Natrium- und Kaliumethylat, Kaliumisopropylat und Natriumbutylat, Erdalkalihydroxide, wie z.B. Calciumhydroxid und vorzugsweise Alkalihydroxide, insbesondere z.B. Natrium- und Kaliumhydroxid.

Anstelle der erfindungsgemäß geeigneten trifunktionellen Polyoxypropylen-polyole (b) mit einer Hydroxylzahl von 20 bis 60, die bevorzugt allein zur Bildung der erfindungsgemäßen Urethangruppen enthaltenden Polyisocyanatmischungen eingesetzt werden, können z.B. zur Modifizierung der mechanischen Eigenschaften der PU-Weich(form)schaumstoffe, auch Mischungen aus den erfindungsgemäß geeigneten trifunktionellen Polyoxypropylen-polyolen (b) und trifunktionellen Polyoxypropylen-polyoxyethylen-polyolen (bl) mit einer Hydroxylzahl von 20 bis 60, vorzugsweise 26 bis 44 und einem Gehalt an polymerisierten Ethylenoxideinheiten von 10 bis 90 Gew.-%, vorzugsweise von 70 bis 88 Gew.-%, bezogen auf das Gesamtgewicht der Alkylenoxideinheiten, verwendet werden. Hierbei können die polymerisierten 1,2-Propylenoxid- und Ethylenoxidgruppen in statischer Verteilung oder als mittel- oder endständige Blöcke gebunden sein. In Abhängigkeit vom Gehalt an Ethylenoxideinheiten und dessen Stellung im Polyoxypropylenpolyoxyethylen-polyol kann dessen Reaktivität und die Mischbarkeit mit dem Roh-MDI sowie den polaren und unpolaren Treibmitteln in der Reaktionsmischung gezielt den jeweiligen Erfordernissen angepaßt werden.

Sofern derartige Polyether-polyolmischungen zur Modifizierung der Roh-MDI Anwendung finden, werden zweckmäßigerweise solche verwendet, die bezogen auf das Gesamtgewicht, enthalten oder vorzugsweise bestehen aus
b) 80 bis 20 Gew.-%, vorzugsweise 70 bis 20 Gew.-% mindestens eines trifunktionellen Polyoxypropylen-polyols (b) mit der Hydroxylzahl von 20 bis 60 und
   b1) 20 bis 80 Gew.-%, vorzugsweise 30 bis 80 Gew.-% mindestens eines trifunktionellen Polyoxypropylen-polyoxyethylen-polyols (bl) mit einer Hydroxylzahl von 20 bis 60 und einem Ethylenoxidgehalt von 10 bis 90 Gew.-%, bezogen auf das Gesamtgewicht der polymerisierten Alkylenoxideinheiten.

Die erfindungsgemäß verwendbaren, flüssigen, Urethangruppen gebunden enthaltenden Polyisocyanatmischungen (A) mit einem Gehalt an NCO-Gruppen von 22 bis 30 Gew.-%, bezogen auf das Gesamtgewicht, können erhalten werden durch Umsetzung von, bezogen auf das Gesamtgewicht,
a) 76 bis 95,5 Gew.-%, vorzugsweise 79 bis 94 Gew.-%, einer Mischung, die ihrerseits, bezogen auf das Gesamtgewicht der Mischung (a), besteht aus
   a1) 45 bis 65 Gew.-%, vorzugsweise 47 bis 60 Gew.-%, 4,4'-MDI,
   a2) 10 bis 50 Gew.-%, vorzugsweise 15 bis 45 Gew.-% 2,4'-MDI,
   a3) 0 bis 1 Gew.-%, vorzugsweise 0,1 bis 0,4 Gew.-% 2,2'-MDI und
   a4) 45 bis 1 Gew.-%, vorzugsweise 33 bis 2 Gew.-%, insbesondere 28 bis 7 Gew.-%, mindestens eines trifunktionellen Polyphenyl-polymethylen-polyisocyanats mit
b) 24 bis 4,5 Gew.-%, vorzugsweise 21 bis 6 Gew.-% mindestens eines trifunktionellen Polyoxypropylen-polyols (b) mit einer Hydroxylzahl von 20 bis 60 oder einer Mischung aus (b) und mindestens einem trifunktionellen Polyoxypropylen-polyoxyethylen-polyol (bl) mit einer Hydroxylzahl von 20 bis 60,
beispielsweise bei einer Temperatur von 10 bis 120°C, vorzugsweise 30° bis 90°C und, in Abhängigkeit von der gewählten Reaktionstemperatur, einer Reaktionszeit von z.B. 0,5 bis 6 Stunden, vorzugsweise 1 bis 3 Stunden. Nach beendeter Umsetzung läßt man die erfindungsgemäßen, flüssigen, Urethangruppen enthaltenden Polyisocyanatmischungen auf MDI-Basis (A) auf Raumtemperatur abkühlen. Die Produkte sind in einem Temperaturbereich von -4 bis 10°C über einen Zeitraum von mindestens 8 Wochen lagerbeständig.

Zur Herstellung der FCKW freien, hochelastischen PU-Weich(form)schaumstoffe werden die flüssigen, Urethangruppen gebunden enthaltenden Polyisocyanatmischungen auf MDI-Basis (A), wie bereits ausgeführt wurde, mit üblichen höhermolekularen Polyhydroxylverbindungen (B) und gegebenenfalls niedermolekularen Kettenverlängerungsmitteln und/oder Vernetzungsmitteln (C) in Gegenwart von Treibmitteln (D), Katalysatoren (E) sowie gegebenenfalls Zusatzstoffen (F) in offenen oder geschlossenen Formwerkzeugen verschäumt.

Als höhermolekulare Polyhydroxylverbindungen (B) finden hierzu vorzugsweise übliche lineare und/oder verzweigte Polyester-polyole und insbesondere Polyether-polyole mit Molekulargewichten von z.B. 1800 bis 8200, vorzugsweise von 2200 bis 7000 und insbesondere von 2800 bis 6200 Anwendung. In Betracht kommen jedoch auch polymermodifizierte Polyether-polyole, Polyether-polyoldispersionen und andere hydroxylgruppenhaltige Polymere und Polykondensationsprodukte mit den obengenannten Molekulargewichten, beispielsweise Polyacetale, Polyesteramide und/oder Polycarbonate, insbesondere solche, hergestellt aus Diphenylcarbonat und Hexandiol-1,6 durch Umesterung oder Mischungen aus mindestens zwei der genannten Polyhydroxylverbindungen.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Alkanoldiolen, mit 2 bis 12 Kohlenstoffatomen, vorzugsweise 2 bis 6 Kohlenstoffatomen und oder Dialkylen-glykolen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Alkanoldiole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Alkanoldiole, insbesondere Mischungen aus 1,4-Butandiol, 1,5-Pentandiol und 1,6-Hexandiol. Eingesetzt werden kannen ferner Polyester-polyole aus Lactonen, z.B. ε-Caprolacton oder Hydroxycarbonsäuren, z.B. ω-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole und/oder Dialkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden. Zur Herstellung foggingarmer Polyester-polyole können die erhaltenen Polyester-polyole mindestens einer zusätzlichen Destillation unter vermindertem Druck, z.B. in einem Dünnschicht- und/oder Fallstromverdampfer, unterworfen werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen eine Funktionalität von vorzugsweise 2 bis 4, insbesondere 2 bis 3 und ein Molekulargewicht von 1800 bis 3600, vorzugsweise von 2200 bis 3200.

Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 4, vorzugsweise 2 bis 3 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkyl-substituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw, 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei-und/oder dreiwertige Alkohole und Dialkylen-glykole, wie Ethandiol, Propandiol-1,2 und -1,3, Diethylenglykol, Dipropylenglykol, Butandiol-1,4, Hexandiol-1,6, Glycerin, Trimethylolpropan und Pentaerythrit.

Die Polyether-polyole, vorzugsweise Polyoxypropylen- und Polyoxypropylen-polyoxyethylen-polyole, besitzen eine Funktionalität von 2 bis 4 und vorzugsweise 2 bis 3 und Molekulargewichte von 1800 bis 8200, vorzugsweise 2200 bis 7000 und insbesondere 2800 bis 6200 und geeignete Polyoxytetramethylen-glykole ein Molekulargewicht bis ungefähr 3600.

Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyetherpolyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den Pfropf-polyether-polyolen oder Polyesterpolyolen sowie den hydroxylgruppenhaltigen Polyesteramiden, Polyacetalen und/oder Polycarbonaten gemischt werden. Vorzüglich bewährt haben sich beispielsweise Mischungen mit einer Funktionalität von 2 bis 3 und einem Molekulargewicht von 1800 bis 8200, die enthalten mindestens ein Polyether-polyol und mindestens ein polymermodifiziertes Polyether-polyol aus der Gruppe der Pfropfpolyether-polyole oder Polyether-polyoldispersionen, die als disperse Phase Polyharnstoffe, Polyhydrazide oder tertiäre Aminogruppen gebunden enthaltende Polyurethane enthalten.

Als hydroxylgruppenhaltige Polyacetale kommen z.B. die aus Glykolen, wie Diethylenglykol, Triethylenglykol, 4,4'-Dihydroxy-ethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie z.B. Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Die FCKW freien PU-Weich(form)schaumstoffe können ohne oder unter Mitverwendung von difunktionellen Kettenverlängerungs- und/ oder mindestens trifunktionellen Vernetzungsmitteln (C) hergestellt werden. Zur Modifizierung der mechanischen Eigenschaften, z.B. der Härte, kann sich jedoch der Zusatz von derartigen Kettenverlängerungsmitteln, Vernetzungsmitteln oder gegebenenfalls auch Gemischen davon als vorteilhaft erweisen. Als Kettenverlängerungs- und/oder Vernetzungsmittel kommen polyfunktionelle, insbesondere di- und/oder trifunktionelle Verbindungen mit Molekulargewichten von 18 bis ungefähr 400, vorzugsweise von 62 bis ungefähr 300 in Betracht. Verwendet werden beispielsweise Di- und/oder Trialkanolamine, wie z.B. Diethanolamin und Triethanolamin, Alkylenglykole, z.B. Diethylen- und Dipropylenglykol, aliphatische Diole und/oder Triole mit 2 bis 6 Kohlenstoffatomen im Alkylenrest, wie z.B. Ethan-, 1,3-Propan-, 1,4-Butan-, 1,5-Pentan-, 1,6-Hexandiol, Glycerin und/oder Trimethylolpropan und niedermolekulare Ethoxylierungs- und/oder Propoxylierungsprodukte, hergestellt aus den vorgenannten Di-, Trialkanolaminen, Diolen und/oder Triolen sowie aliphatischen und/oder aromatischen Diaminen wie z.B. 1,2-Ethan-, 1,4-Butan-, 1,6-Hexandiamin, 2,3-, 2,4- und/oder 2,6-Toluylen-diamin, 4,4'-Diamino-diphenylmethan, 3,3'-di- und/oder 3,3',5,5'-tetraalkyl-substituierten 4,4'-Diaminodiphenylmethanen als Startermolekülen und Alkylenoxid oder -gemischen.

Als Kettenverlängerungs- und/oder Vernetzungsmittel (C) vorzugsweise eingesetzt werden Dialkanolamine, Diole und/oder Triole und insbesondere Diethanolamin, Hexandiol-1,6, Butandiol-1,4, Trimethylolpropan und Glycerin oder Mischungen davon.

Die Kettenverlängerungs- und/oder Vernetzungsmittel (C), die vorteilhafterweise zur Herstellung der PU-Weich(form)schaumstoffe mitverwendet werden, kommen zweckmäßigerweise in solchen Gewichtsmengen zur Anwendung, die pro Mol höhermolekularer Polyhydroxylverbindung (B) 0,01 bis 8 Mole, insbesondere 0,1 bis 3 Mole Kettenverlängerungsmittel und/oder Vernetzungsmittel (c) in der Reaktionsmischung vorliegen.

Als Treibmittel (D) zur Herstellung der PU-Weich(form)-schaumstoffe, findet insbesondere Wasser Verwendung, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 2,5 bis 6,0 Gew.-Teile und insbesondere 3,3 bis 4,3 Gew.-Teile, bezogen auf 100 Gew.-Teile der Polyhydroxylverbindungen (B).

Als Treibmittel geeignet sind ferner Flüssigkeiten, welche gegenüber den flüssigen, mit Urethangruppen modifizierten Polyisocyanatmischungen (A) inert sind und Siedepunkte unter 80°C, vorzugsweise unter 50°C, insbesondere zwischen -50°C und 30°C bei Atmosphärendruck aufweisen, so daß sie unter dem Einfluß der exothermen Polyadditionsreaktion verdampfen sowie Mischungen aus solchen physikalisch wirkenden Treibmitteln und Wasser. Beispiele derartiger, vorzugsweise verwendbarer Flüssigkeiten sind Alkane, wie z.B. Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, z.B. wie Furan, Dimethylether und Diethylether, Ketone, wie z.B. Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlor-difluorethane, l,l-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und andere carboxylgruppenhaltige Verbindungen.

Als Treibmittel vorzugsweise Verwendung finden Chlordifluormethan, Chlordifluorethane, Dichlorfluorethane, Pentangemische, Cyclopentan, Cyclohexan und insbesondere Wasser sowie Mischungen aus mindestens zwei dieser Treibmittel, z.B. Mischungen aus Wasser und Cyclopentan und/oder Cyclohexan, Mischungen aus Chlordifluormethan und l-Chlor-2,2-difluorethan und gegebenenfalls Wasser. Als Treibmittel nicht verwendet werden Fluorchlorkohlenwasserstoffe, die die Ozonschicht schädigen.

Die erforderliche Menge an physikalisch wirkenden Treibmitteln kann in Abhängigkeit von der gewünschten Schaumstoffdichte und der gegebenenfalls eingesetzten Wassermenge auf einfache Weise experimentell ermittelt werden und beträgt ungefähr 0 bis 25 Gew.-Teile, vorzugsweise 0 bis 15 Gew.-Teile pro 100 Gew.-Teile der Polyhydroxylverbindungen (B). Gegebenenfalls kann es zweckmäßig sein, die Urethangruppen gebunden enthaltenden Polyisocyanatmischungen (A) mit dem inerten physikalisch wirkenden Treibmittel zu mischen und dadurch ihre Viskosität zu verringern.

Als Katalysatoren (E) zur Herstellung der FCKW freien, hochelastischen PU-Weichschaumstoffe und PU-Weichformschaumstoffe werden vorzugsweise Verbindungen verwendet, die die Reaktion der Hydroxylgruppen enthaltenden Verbindungen der Komponenten (B) und gegebenenfalls (C) mit den flüssigen, Urethangruppen gebunden enthaltenden Polyisocyanatmischungen auf MDI-Basis (A) stark beschleunigen. In Betracht kommen organische Metallverbindungen, vorzugsweise organische Zinnverbindungen, wie Zinn-(II)-salze von organischen Carbonsäuren, z.B. zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat und stark basische Amine, beispielsweise Amidine, wie z.B. 2,3-Dimethyl-3,4,5,6-tetrahydropyrimidin, tertiäre Amine, wie z.B. Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Di-(4-dimethylaminocyclohexl)-methan, Pentamethyl-diethylentriamin, Tetramethyl-di(aminoethyl)ether, Bis-(dimethylaminopropyl)-harnstoff, Dimethylpiperazin, 1,2-Dimethylimidazol, l-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen und Kombinationen aus den organischen Metallverbindungen und stark basischen Aminen. Vorzugsweise verwendet werden 0,001 bis 5 Gew.-%, insbesondere 0,05 bis 2 Gew.-% Katalysator bzw. Katalysatorkombination bezogen auf das Gewicht der Polyhydroxylverbindung (B).

Der Reaktionsmischung zur Herstellung der PU-Weich(form)-schaumstoffe können gegebenenfalls auch noch Zusatzstoffe (F) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindungen (B), angewandt.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie z.B. silikatische Mineralien, beispielsweise Schichtsilikate wie Antigorit, Serpentin, Hornblenden, Amphibole, Chrysotil, Zeolithe, Talkum; Metalloxide, wie z.B. Kaolin, Aluminiumoxide, Aluminiumsilikat, Titanoxide und Eisenoxide, Metallsalze wie z.B. Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (A) bis (C), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumsulfat, Ammoniumpolyphosphat, Blähgraphit und Calciumsulfat oder Cyanursäurederivate, wie z.B. Melamin oder Mischungen aus mindestens zwei Flammschutzmitteln, wie z.B. Ammoniumpolyphosphaten und Melamin und/oder Blähgraphit sowie gegebenenfalls Stärke zum Flammfestmachen der erfindungsgemäß hergestellten PU-Weich(form)-schaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (A) bis (C) zu verwenden.

Nähere Angaben über die oben genannten anderen üblichen Hilfs-und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Weich(form)schaumstoffe können die flüssigen Urethangruppen gebunden enthaltenden Polyisocyanatmischungen (A), höhermolekularen Polyhydroxylverbindungen (B) und gegebenenfalls Kettenverlängerungs- und/oder Vernetzungsmittel (C) in Gegenwart von Treibmitteln (D), Katalysatoren (E) und gegebenenfalls Zusatzstoffen (F) bei Temperaturen von z.B. 10 bis 100°C, vorzugsweise 18 bis 80°C in solchen Mengenverhältnissen zur Reaktion gebracht werden, daß pro NCO-Gruppe zweckmaßigerweise 0,5 bis 2, vorzugsweise 0,8 bis 1,3 und insbesondere ungefähr ein reaktive(s) Wasserstoffatom(e) gebunden an die Ausgangskomponenten (B) und gegebenenfalls (C) vorliegen und, sofern Wasser als Treibmittel verwendet wird, das Molverhältnis von Äquivalente Wasser zu Äquivalente NCO-Gruppe vorteilhafterweise 0,5 bis 5 : 1, vorzugsweise 0,7 bis 0,95 : 1 und insbesondere 0,75 bis 0,85 : 1 beträgt.

Die PU-Weich(form)schaumstoffe werden zweckmäßigerweise nach dem one shot-Verfahren durch Vermischen von zwei Komponenten hergestellt, wobei die Ausgangskomponenten (B), (D), (E) und gegebenenfalls (C) und (F) zu der sogenannten Polyol-Komponente vereinigt und als Polyisocyanat-Komponente die Urethangruppen gebunden enthaltende Polyisocyanatmischung, gegebenenfalls im Gemisch mit (F) und inerten, physikalisch wirkenden Treibmitteln verwendet werden. Da die Polyol-Komponente und Polyisocyanat-Komponente sehr gut lagerstabil sind, müssen diese vor Herstellung der PU-Weich(form)schaumstoffe nur noch intensiv gemischt werden. Die Reaktionsmischung kann in offenen oder geschlossenen Formwerkzeugen verschäumt werden; sie eignet sich ferner zur Herstellung von Blockschaumstoffen.

Zur Herstellung von PU-Weichformschaumstoffen wird die Reaktionsmischung vorteilhafterweise mit einer Temperatur von 18 bis 80°C, vorzugsweise 30 bis 65°C in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung z.B. bei Verdichtungsgraden von 1,1 bis 8, vorzugsweise von 2 bis 6 und insbesondere 2,2 bis 4 in dem geschlossenen Formwerkzeug aushärten.

Die PU-Weichschaumstoffe besitzen üblicherweise freigeschäumte Dichten von z.B. 30 bis 60 g/l vorzugsweise von 40 bis 55 g/l und insbesondere von 45 bis 52 g/l. Aus derartigen Schaumstoff-Formulierungen hergestellte PU-Weichschaumstoff-Formkörper können in Abhängigkeit vom angewandten Verdichtsgrad eine Gesamtdichte von 36 bis 55 g/l, vorzugsweise von 45 bis 50 g/l aufweisen.

Die nach dem erfindungsgemäßen Verfahren hergestellten PU-Weichschaumstoffe eignen sich z.B. als Sitzpolster für Polstermöbel und die PU-Formweichschaumstoffe als Polsterelemente, Armlehnen, Kopfstützen, Sonnenblenden und Sicherheitsabdeckungen in Fahrzeugkabinen, vorzugsweise in Kraftfahrzeugen und Flugzeugen.

### Beispiele

### Herstellung der Urethangruppen gebunden enthaltenden Polyisocyanatmischungen

### Beispiele erfindungsgemäß verwendbarer Polyisocyanatmischungen (A)

Zu einer erfindungsgemäß verwendbaren Mischung aus Diphenylmethan-diisocyanaten und Polyphenyl-polymethylen-polyisocyanaten (Roh-MDI-Mischung El bis E7) fügte man unter Rühren bis 80°C ein erfindungsgemäß verwendbares trifunktionelles Polyoxypropylen-polyol oder eine Mischung aus einem trifunktionellen Polyoxypropylen-polyol und einem trifunktionellen Polyoxypropylen-(25 Gew.-%)-polyoxyethylen(75 Gew.-%)-polyol. Nach einer Nachreaktionszeit von einer Stunde bei 80°C ließ man die mit Urethangruppen modifizierte Polyisocyanatmischung auf MDI-Basis (A) auf 23°C abkühlen.

### Vergleichsprodukte

Man verfährt analog den Angaben zur Herstellung der erfindungsgemäß verwendbaren Polyisocyanatmischungen (A), verwendet jedoch nicht erfindungsgemäß geeignete Polyoxyalkylen-polyole.

Zur Herstellung der Urethangruppen gebunden enthaltenden Polyisocyanatmischungen fanden die in Tabelle 1 genannten Roh-MDI-Mischungen E1 bis E7 Verwendung

| Roh-MDI-Mischung | 4,4'-MDI [Gew.-%]* | 2,4'-MDI [Gew.-%]* | 2,2'-MDI [Gew.-%]* | Höhere Homologe [Gew.-%]* |
|---|---|---|---|---|
| E1 | 48,4 | 44,0 | 0,1 | 7,5 |
| E2 | 59,2 | 15,3 | 0,4 | 25,1 |
| E3 | 48,4 | 44,0 | 0,1 | 7,5 |
| E4 | 58,2 | 15,3 | 0,4 | 25,1 |
| E5 | 48,3 | 43,8 | 0,1 | 7,8 |
| E6 | 58,7 | 15,1 | 0,4 | 25,8 |
| E7 | 46,9 | 38,7 | 0,2 | 14,2 |

| | | | | |
|---|---|---|---|---|
| *bezogen auf das Gesamtgewicht der Roh-MDI-Mischung | | | | |

Die zur Herstellung der Urethangruppen gebunden enthaltenden Polyisocyanatmischungen verwendeten Roh-MDI und Polyether-polyole, die eingesetzten Mengen und der Isocyanatgehalt der erhaltenen erfindungsgemäß verwendbaren Polyisocyanatmischung (A) und der Vergleichsprodukte sind in Tabelle 2 zusammengefaßt.

In Tabelle 2 bedeuten:

| | |
|---|---|
| TMP-PO | mit Trimethylolpropan gestartetes Polyoxypropylenpolyol |
| Gly-PO | mit Glycerin gestartetes Polyoxypropylen-polyol |
| Gly-PO/EO | mit Glycerin gestartetes Polyoxypropylen(25 Gew.-%)-polyoxyethylen(75 Gew.-%)-polyol |
| Gly-EO | mit Glycerin gestartetes Polyoxyethylen-polyol |
| III-PO | mit 1,3-Propandiol gestartetes Polyoxypropylen-glykol. |

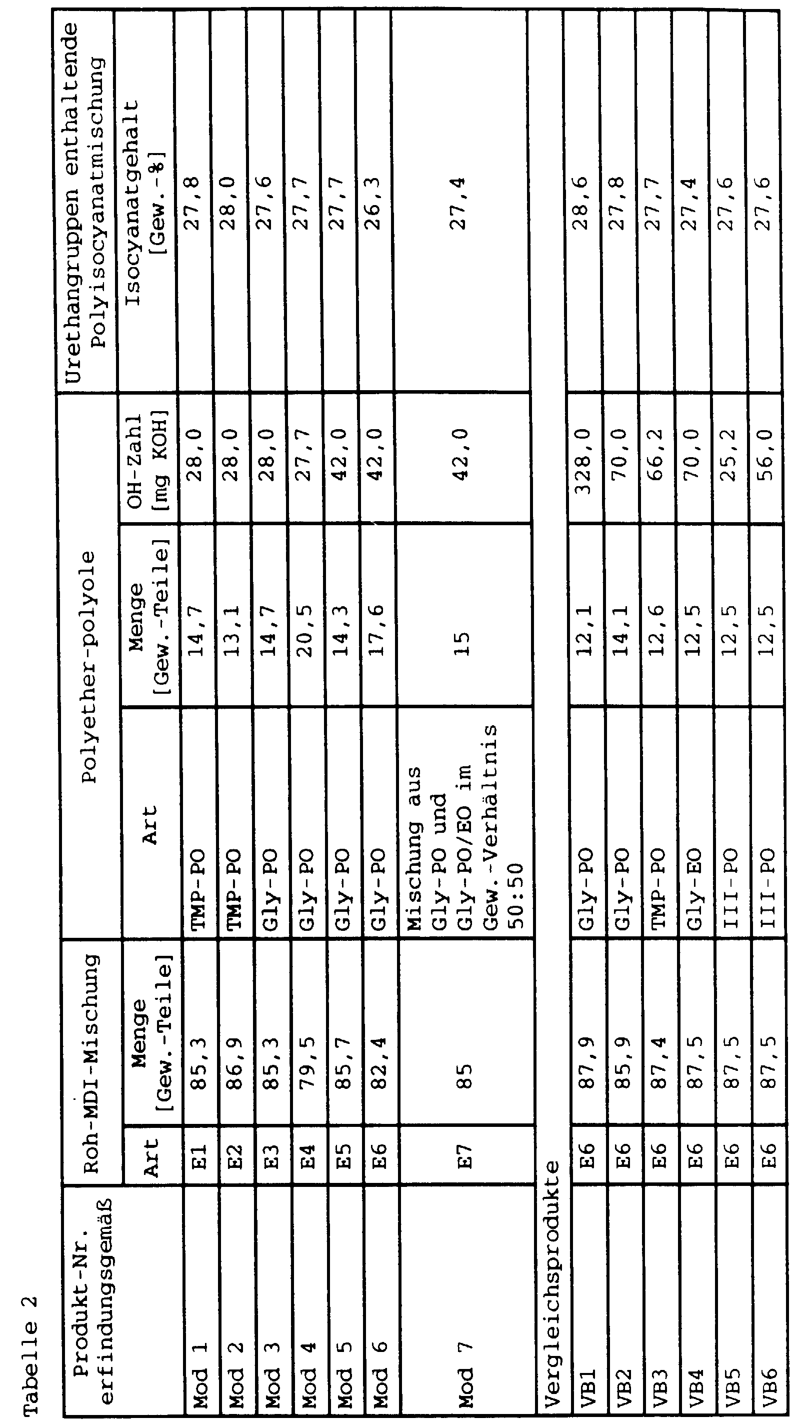

### Herstellung der PU-Weichschaumstoffe

### Beispiele 1 bis 14 und Vergleichsbeispiele I bis XI

A-Komponente: Mischung, die bestand aus

| | |
|---|---|
| 93,08 | Gew.-Teilen eines mit Glycerin gestarteten Polyoxypropylen(86,2 Gew.-%)-polyoxyethylen(13,8 Gew.-%)-polyols mit einer Hydroxylzahl von 28, entsprechend einem Molekulargewicht von ungefähr 6000, |
| | |
| 2,5 | Gew.-Teilen eines mit Glycerin gestarteten Polyoxypropylen (25 5 Gew.-%)-polyoxyethylen(75 Gew.-%)-polyols mit einer Hydroxylzahl von 42, entsprechend einem Molekulargewicht von ungefähr 4000, |
| | |
| 3,30 | Gew.-Teilen Wasser, |
| | |
| 0,45 | Gew.-Teilen einer 33 gew.-%igen Lösung von Triethylendiamin in Dipropylen-glykol, |
| | |
| 0,12 | Gew.-Teilen einer 70 gew.-%igen Lösung von Bis-(N,N-dimethylaminoethyl)-ether in Dipropylen-glykol, |
| | |
| 0,45 | Gew.-Teilen 2-(2-Dimethylaminoethoxy )-ethanol und |
| | |
| 0,1 | Gew.-Teilen eines Schaumstabilisators auf Silikonbasis (Tegostab® B 8680 der Firma Goldschmidt, Essen) |

### B-Komponente:

erfindungsgemäß modifizierte, Urethangruppen enthaltende Polyisocyanatmischungen (A) nach Produktnummer Mod. 1 bis Mod. 7 und Vergleichsprodukte VB1 bis VB6.

Zur Herstellung der PU-Weichformschaumstoffe wurden 100 Gew.-Teile der A-Komponente mit einer dem Isocyanatindex 80 bzw. 100 entsprechenden Menge der B-Komponente bei 23°C mit Hilfe eines Rührers intensiv gemischt, die Reaktionsmischung in ein auf 45°C temperiertes metallisches Formwerkzeug mit den inneren Abmessungen 40 cm x 40 cm x 10 cm eingefüllt und im geschlossenen Formwerkzeug aufschäumen und ausreagieren gelassen. Das erhaltene Formteil wurde nach 5 Minuten entformt.

Die zur Herstellung des PU-Weichformschaumstoffs verwendete Urethangruppen enthaltende Polyisocyanatmischung und die an dem erhaltenen Formteil gemessenen Eigenschaften sind in Tabelle 3 (Beispiele) und Tabelle 4 (Vergleichsbeispiele) zusammengefaßt.

Die nach dem erfindungsgemäßen Verfahren hergestellten PU-Weichformschaumstoffe (Beispiele, Tabelle 3) zeigen im Vergleich zu bekannten Weichformschaumstoffen (Vergleichsbeispiele, Tabelle 4) ein hohes mechanisches Eigenschaftsniveau, insbesondere eine sehr hohe Elastizität, ausgedrückt durch die Meßwerte des Ball-Rebound-Tests nach ASTM D-3574-86.

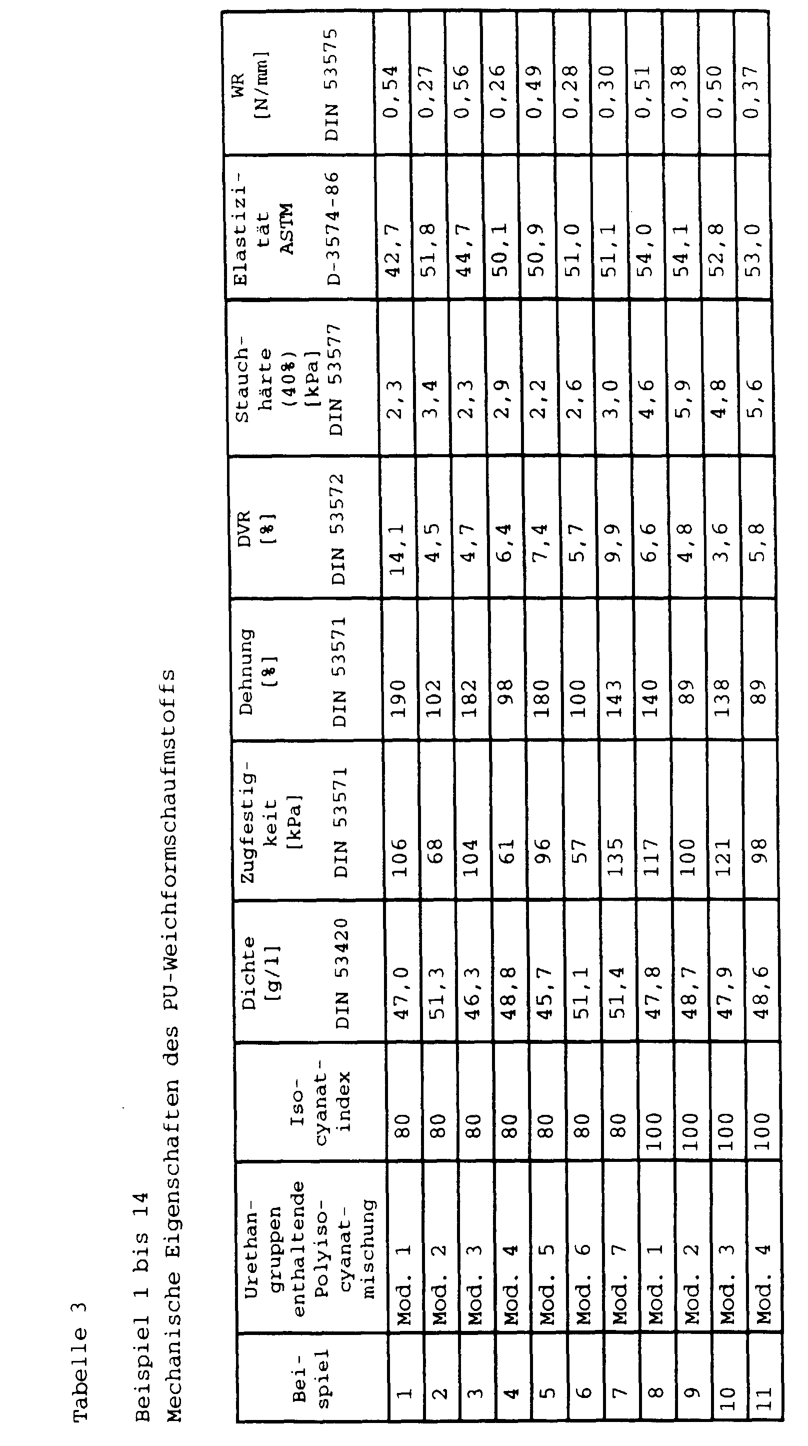

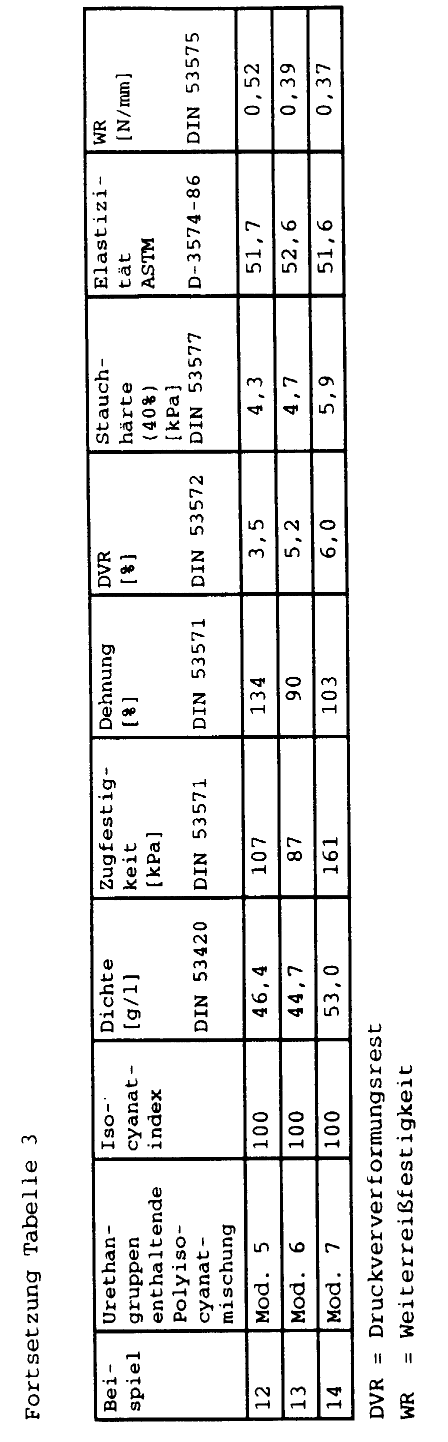

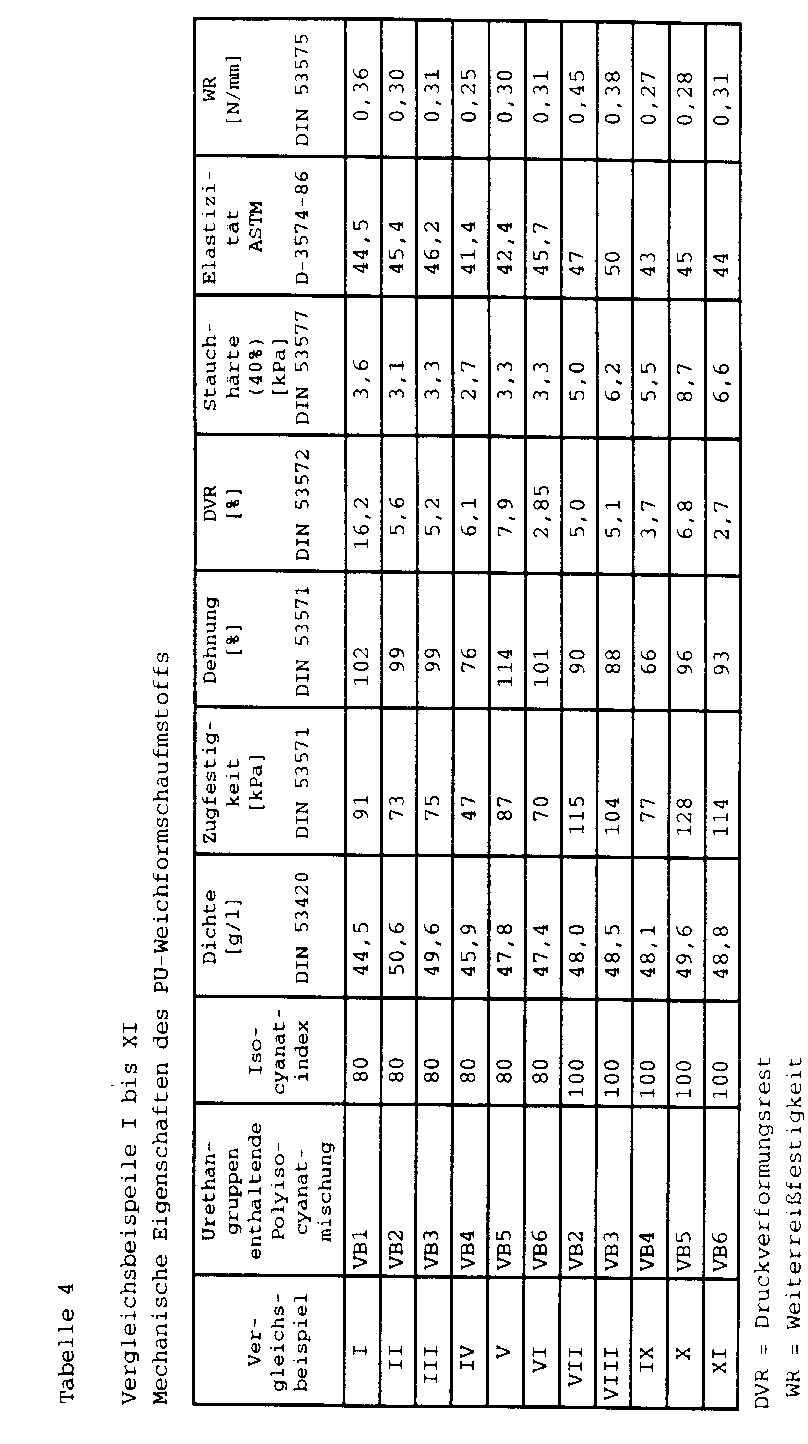

### Prüfung des Sitzkomforts der PU-Weichformschaumstoffe

Der Sitzkomfort der PU-Weichformschaumstoffe wurde mit Hilfe folgender Meßmethode ermittelt:

Ein 16-1-Prüfkissen wird mit einem Prüfstempel (entspr. DIN 53 574) mit einer konstanten Kraft von 750 N belastet, die die konstante Belastung durch das Gewicht einer daraufsitzenden Person repräsentieren soll. Zusätzlich wird eine kleine, sinusförmige Kraft mit einer Amplitude von 50 N und einer Frequenz von 5 Hz überlagert, die zusätzliche, kleine Kräfte darstellen soll. Gemessen wird die Wegamplitude der dadurch hervorgerufenen, sinusförmigen Deformation. Das Verhältnis von Kraft und Weg dieser Zusatzschwingung kann man als lokalen E-Modul bezeichnen und es ist ein Maß für die tatsächlich empfundene Härte unter Belastung bei kleinen Stößen. Der Sitzkomfort ist daher umso höher, je kleiner dieser lokale E-Modul ist und damit je weicher der Sitz erscheint.

Die nachfolgende Graphik zeigt einen konventionellen Weichformschaum (A) und einen erfindungsgemäß hergestellten PU-Weichformschaumstoff, der bei vergleichbarer Dichte (48 bzw. 50 g/l) und gleicher Stauchhärte sowie gleicher konstanter Last einen niedrigeren lokalen E-Modul besitzt und daher weicher und komfortabler erscheint als der konventionelle Weichformschaum (A).

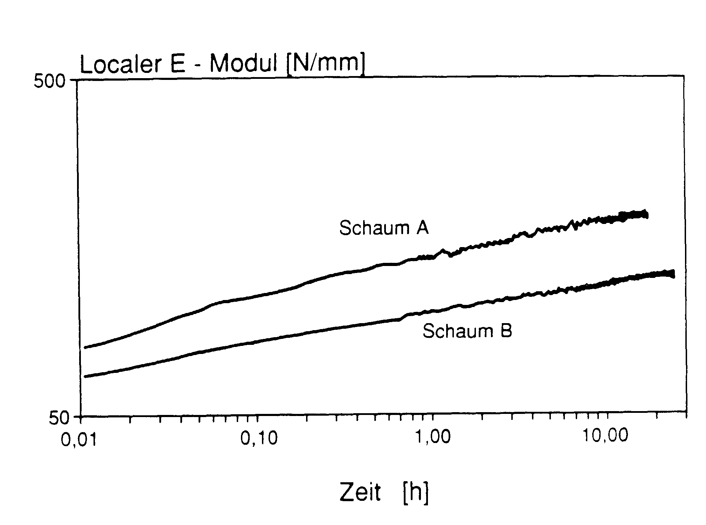

## Patentansprüche

1. Verfahren zur Herstellung von Fluorchlorkohlenwasserstoff freien Polyurethan-Weichschaumstoffen durch Umsetzung von
A) flüssigen, Urethangruppen gebunden enthaltenden Polyisocyanatmischungen auf Diphenylmethan-diisocyanatbasis mit
B) höhermolekularen Polyhydroxylverbindungen mit Molekular-gewichten von 1800 bis 8200 und
C) gegebenenfalls niedermolekularen Kettenverlängerungsmitteln und/oder Vernetzungsmitteln mit Molekulargewichten von 18 bis 400
in Gegenwart von
D) Treibmitteln,
E) Katalysatoren
sowie gegebenenfalls
F) Zusatzstoffen,
dadurch gekennzeichnet, daß die flüssigen, Urethangruppen gebunden enthaltende Polyisocyanatmischungen (A) einen Gehalt an NCO-Gruppen von 22 bis 30 Gew.-%, bezogen auf das Gesamtgewicht, besitzen und erhalten werden durch Umsetzung
a) einer Mischung (a) aus Disphenylmethan-diisocyanaten und Polyphenyl-polymethylen-polyisocyanaten mit einem Gehalt an Diphenylmethan-diisocyanat-Isomeren von 55 bis 99 Gew.-%, bezogen auf das Gesamtgewicht, mit
b) mindestens einem trifunktionellen Polyoxypropylenpolyol (b) mit einer Hydroxylzahl von 20 bis 60.

2. Verfahren nach Anspruch 1, dadurch gekennzeichnet, daß die Mischung (a) aus Diphenylmethan-diisocyanaten und Polyphenylpolmethylen-polyisocyanaten, besogen auf das Gesamtgewicht, enthält
a1) 45 bis 65 Gew.-% 4,4'-Diphenylmethan-diisocyanat
a2) 10 bis 50 Gew.-% 2,4'-Diphenylmethan-diisocyanat,
a3) 0 bis 1 Gew.-% 2,2'-Diphenylmethan-diisocyanat und
a4) 45 bis 1 Gew.-% mindestens trifunktionelle Polyphenyl-polymethylen-polyisocyanate.

3. Verfahren nach Anspruch 1, dadurch gekennzeichnet, daß die flüssigen, Urethangruppen gebunden enthaltenden Polyisocyanatmischungen (A) mit einem Gehalt an NCO-Gruppen von 22 bis 30 Gew.-%, bezogen auf das Gesamtgewicht, erhalten werden durch Umsetzung von, bezogen auf das Gesamtgewicht,
a) 76 bis 95,5 Gew.-% einer Mischung (a), die ihrerseits, bezogen auf das Gesamtgewicht der Mischung (a), besteht aus
a1) 45 bis 65 Gew.-% 4,4'-Diphenylmethan-diisocyanat,
a2) 10 bis 50 Gew.-% 2,4'-Diphenylmethan-diisocyanat,
a3) 0 bis 1 Gew.-% 2,2'-Diphenylmethan-diisocyanat und
a4) 45 bis 1 Gew.-% mindestens eines trifunktionellen Polyphenyl-polymethylen-polyisocyanats mit
b) 24 bis 4,5 Gew.-% mindestens eines trifunktionellen Polyoxypropylen-polyols mit einer Hydroxylzahl von 20 bis 60.

4. Verfahren nach Anspruch 1, dadurch gekennzeichnet, daß man als höhermolekulare Polyhydroxylverbindungen (B) Polyether-polyole mit einer Funktionalität von 2 bis 3 und einem Molekulargewicht von 1800 bis 8200 oder Mischungen mit einer Funktionalität von 2 bis 3 und einem Molekulargewicht von 1800 bis 8200 verwendet aus derartigen Polyether-polyolen und polymermodifizierten Polyether-polyolen aus der Gruppe der Pfropfpolyether-polyole oder Polyether-polyoldispersionen, die als disperse Phase Polyharnstoffe, Polyhydrazide oder tertiäre Aminogruppen gebunden enthaltende Polyurethane enthalten.

5. Verfahren nach Anspruch 1, dadurch gekennzeichnet, daß man als Treibmittel (D) Wasser verwendet.

6. Flüssige, Urethangruppen gebunden enthaltende Polyisocyanatmischungen auf Diphenylmethan-diisocyanatbasis mit einem Gehalt an NCO-Gruppen von 22 bis 30 Gew.-%, erhältlich durch Umsetzung
a) einer Mischung (a) aus Diphenylmethan-diisocyanaten und Polyphenyl-polymethylen-polyisocyanaten mit einem Gehalt an Diphenylmethan-diisocyanat-Isomeren von 55 bis 99 Gew.-%, bezogen auf das Gesamtgewicht, mit
b) mindestens einem trifunktionellen Polyoxypropylen-polyol (b) mit einer Hydroxylzahl von 20 bis 60.

7. Flüssige, Urethangruppen enthaltende Polyisocyanatmischungen nach Anspruch 6, dadurch gekennzeichnet, daß die Mischung (a) aus Diphenylmethan-diisocyanaten und Polyphenyl-polymethylen-polyisocyanaten, bezogen auf das Gesamtgewicht enthält
a1) 45 bis 65 Gew.-% 4,4'-Diphenylmethan-diisocyanat,
a2) 10 bis 50 Gew.-% 2,4'-Diphenylmethan-diisocyanat,
a3) 0 bis 1 Gew.-% 2,2'-Diphenylmethan-diisocyanat und
a4) 45 bis 1 Gew.-% mindestens eines trifunktionellen Polyphenyl-polymethylen-polyisocyanats.

8. Flüssige, Urethangruppen enthaltende Polyisocyanatmischungen nach Anspruch 6, erhältlich durch Umsetzung von, bezogen auf das Gesamtgewicht,
a) 76 bis 95,5 Gew.-% einer Mischung (a), die ihrerseits, bezogen auf das Gesamtgewicht der Mischung (a), besteht aus
a1) 45 bis 65 Gew.-% 4,4'-Diphenylmethan-diisocyanat,
a2) 10 bis 50 Gew.-% 2,4'-Diphenylmethan-diisocyanat,
a3) 0 bis 1 Gew.-% 2,2'-Diphenylmethan-diisocyanat und
a4) 45 bis 1 Gew.-% mindestens eines trifunktionellen Polyphenyl-polymethylen-polyisocyanats mit
b) 24 bis 4,5 Gew.-% mindestens eines trifunktionellen Polyoxypropylen-polyols mit einer Hydroxylzahl von 20 bis 60.

## Claims

1. A process for the preparation of CFC-free, flexible polyurethane foams by reacting
A) liquid, diphenylmethane diisocyanate-based polyisocyanate mixtures containing bonded urethane groups with
B) relatively high-molecular-weight polyhydroxyl compounds having molecular weights of from 1800 to 8200 and
C) if desired, low-molecular-weight chain extenders and/or crosslinking agents having molecular weights of from 18 to 400,
in the presence of
D) blowing agents,
E) catalysts
and, if desired,
F) additives,
wherein the liquid polyisocyanate mixtures (A) containing bonded urethane groups have a content of NCO groups of from 22 to 30 % by weight, based on the total weight, and are obtained by reacting
a) a mixture (a) of diphenylmethane diisocyanates and polyphenyl-polymethylene polyisocyanates having a content of diphenylmethane diisocyanate isomers of from 55 to 99 % by weight, based on the total weight, with
b) at least one trifunctional polyoxypropylene polyol (b) having a hydroxyl number of from 20 to 60.

2. A process as claimed in claim 1, wherein the mixture (a) of diphenylmethyl diisocyanates and polyphenyl-polymethylene polyisocyanates contains, based on the total weight,
a1) from 45 to 65 % by weight of 4,4'-diphenylmethane diisocyanate,
a2) from 10 to 50 % by weight of 2,4'-diphenylmethane diisocyanate,
a3) from 0 to 1 % by weight of 2,2'-diphenylmethane diisocyanate and
a4) from 45 to 1 % by weight of at least trifunctional polyphenyl-polymethylene polyisocyanates.

3. A process as claimed in claim 1, wherein the liquid polyisocyanate mixtures (A) containing bonded urethane groups and having a content of NCO groups of from 22 to 30 % by weight, based on the total weight, are obtained by reacting, based on the total weight,
a) from 76 to 95.5 % by weight of a mixture (a) which itself comprises, based on the total weight of the mixture (a),
a1) from 45 to 65 % by weight of 4,4'-diphenylmethane diisocyanate,
a2) from 10 to 50 % by weight of 2,4'-diphenylmethane diisocyanate,
a3) from 0 to 1 % by weight of 2,2'-diphenylmethane diisocyanate and
a4) from 45 to 1 % by weight of at least one trifunctional polyphenyl-polymethylene polyisocyanate with
b) from 24 to 4.5 % by weight of at least one trifunctional polyoxypropylene-polyol having a hydroxyl number of from 20 to 60.

4. A process as claimed in claim 1, wherein the relatively high-molecular-weight polyhydroxyl compounds (B) are polyether-polyols having a functionality of from 2 to 3 and a molecular weight of from 1800 to 8200 or mixtures, having a functionality of from 2 to 3 and a molecular weight of from 1800 to 8200, of such polyether-polyols and polymer-modified polyether-polyols from the group consisting of graft polyether-polyols or polyether-polyol dispersions containing, as disperse phase, polyureas, polyhydrazides or polyurethanes, the latter containing bonded tertiary amino groups.

5. A process as claimed in claim 1, wherein the blowing agent (D) is water.

6. A liquid, diphenylmethane diisocyanate-based polyisocyanate mixture containing bonded urethane groups and having a content of NCO groups of from 22 to 30 % by weight, obtainable by reacting
a) a mixture (a) of diphenylmethane diisocyanates and polyphenyl-polymethylene polyisocyanates having a content of diphenylmethane diisocyanate isomers of from 55 to 99 % by weight, based on the total weight, with
b) at least one trifunctional polyoxypropylene polyol (b) having a hydroxyl number of from 20 to 60.

7. A liquid polyisocyanate mixture containing urethane groups as claimed in claim 6, wherein the mixture (a) of diphenylmethane diisocyanates and polyphenyl-polymethylene polyisocyanates comprises, based on the total weight,
a1) from 45 to 65 % by weight of 4,4'-diphenylmethane diisocyanate,
a2) from 10 to 50 % by weight of 2,4'-diphenylmethane diisocyanate,
a3) from 0 to 1 % by weight of 2,2'-diphenylmethane diisocyanate and
a4) from 45 to 1 % by weight of at least one trifunctional polyphenyl-polymethylene polyisocyanate.

8. A liquid polyisocyanate mixture containing urethane groups as claimed in claim 6, obtainable by reacting, based on the total weight,
a) from 76 to 95.5 % by weight of a mixture (a) which itself comprises, based on the total weight of the mixture (a),
a1) from 45 to 65 % by weight of 4,4'-diphenylmethane diisocyanate,
a2) from 10 to 50 % by weight of 2,4'-diphenylmethane diisocyanate,
a3) from 0 to 1 % by weight of 2,2'-diphenylmethane diisocyanate and
a4) from 45 to 1 % by weight of at least one trifunctional polyphenyl-polymethylene polyisocyanate with
b) from 24 to 4.5 % by weight of at least one trifunctional polyoxypropylene-polyol having a hydroxyl number of from 20 to 60.

## Revendications

1. Procédé pour la préparation de mousses souples de polyuréthanne exemptes de fluorochlorocarbones, par la mise en réaction de
A) des mélanges de polyisocyanates liquides contenant des groupes uréthane à l'état lié, à base de diphénylméthane-diisocyanates avec
B) des composés polyhydroxylés à poids moléculaires élevés, possédant des poids moléculaires de 1800 à 8200, et
C) le cas échéant, avec des agents d'allongement de chaînes et/ou des agents de réticulation à bas poids moléculaires, possédant des poids moléculaires de 18 à 400,
en présence de
D) des agents moussants,
E) des catalyseurs,
et le cas échéant,
F) des additifs,
caractérisé en ce que les mélanges de polyisocyanates liquides (A) contenant des groupes uréthane à l'état lié possèdent une teneur en groupes NCO de 22 à 30% en poids rapportés au poids total, et sont obtenus par la mise en réaction de
a) un mélange (a) de diphénylméthane-diisocyanates et de polyphényl-polyméthylène-polyisocyanates, possédant une teneur en isomères du diphénylméthane-diisocyanate de 55 à 99% en poids rapportés au poids total, avec
b) au moins un polyoxypropylène-polyol trifonctionnel (b) possédant un indice d'hydroxyle de 20 à 60.

2. Procédé selon la revendication 1, caractérisé en ce que le mélange (a) de diphénylméthane-diisocyanates et de polyphényl-polyméthylène-polyisocyanates contient, rapportés au poids total,
a1) du 4,4'-diphénylméthane-diisocyanate à concurrence de 45 à 65% en poids,
a2) du 2,4'-diphénylméthane-diisocyanate à concurrence de 10 à 50% en poids,
a3) du 2,2'-diphénylméthane-diisocyanate à concurrence de 0 à 1% en poids, et
a4) des polyphényl-polyméthylène-polyisocyanates au moins trifonctionnels à concurrence de 45 à 1% en poids.

3. Procédé selon la revendication 1, caractérisé en ce que les mélanges de polyisocyanates liquides (A) contenant des groupes uréthane à l'état lié, possédant une teneur en groupes NCO de 22 à 30% en poids rapportés au poids total, sont obtenus par la mise en réaction, rapportés au poids total, de
a) à concurrence de 76 à 95,5% en poids, un mélange (a) qui, quant à lui, rapportés au poids total du mélange (a), est constitué par
a1) du 4,4'-diphénylméthane-diisocyanate à concurrence de 45 à 65% en poids,
a2) du 2,4'-diphénylméthane-diisocyanate à concurrence de 10 à 50% en poids,
a3) du 2,2'-diphénylméthane-diisocyanate à concurrence de 0 à 1% en poids, et
a4) au moins un polyphényl-polyméthylène-polyisocyanate trifonctionnel à concurrence de 45 à 1% en poids, avec
b) à concurrence de 24 à 4,5% en poids, au moins un polyoxypropylène-polyol trifonctionnel possédant un indice d'hydroxyle de 20 à 60.

4. Procédé selon la revendication 1, caractérisé en ce qu'on utilise, à titre de composés polyhydroxylés (B) à poids moléculaires élevés, des polyéther-polyols possédant une fonctionnalité de 2 à 3 et un poids moléculaire de 1800 à 8200, ou encore des mélanges possédant une fonctionnalité de 2 à 3 et un poids moléculaire de 1800 à 8200 constitués par des polyéther-polyols de ce type et par des polyéther-polyols modifiés par une mise en réaction analogue aux réactions sur des polymères, choisis parmi le groupe comprenant des polyéther-polyols greffés ou des dispersions de polyéther-polyols qui contiennent, à titre de phase dispersée, des polyurées, des polyhydrazides ou encore des polyuréthannes contenant des groupes amino tertiaires à l'état lié.

5. Procédé selon la revendication 1, caractérisé en ce qu'on utilise de l'eau à titre d'agent moussant (D).

6. Mélanges de polyisocyanates liquides contenant des groupes uréthane à l'état lié à base de diphénylméthane-diisocyanates, possédant une teneur en groupes NCO de 22 à 30% en poids, que l'on obtient par la mise en réaction de
a) un mélange (a) de diphénylméthane-diisocyanates et de polyphényl-polyméthylène-polyisocyanates, possédant une teneur en isomères du diphénylméthane-diisocyanate de 55 à 99% en poids rapportés au poids total, avec
b) au moins un polyoxypropylène-polyol trifonctionnel (b) possédant un indice d'hydroxyle de 20 à 60.

7. Mélanges de polyisocyanates liquides contenant des groupes uréthane selon la revendication 6, caractérisé en ce que le mélange (a) constitué par des diphénylméthane-diisocyanates et par des polyphényl-polyméthylène-polyisocyanates contient, rapportés au poids total,
a1) du 4,4'-diphénylméthane-diisocyanate à concurrence de 45 à 65% en poids,
a2) du 2,4'-diphénylméthane-diisocyanate à concurrence de 10 à 50% en poids,
a3) du 2,2'-diphénylméthane-diisocyanate à concurrence de 0 à 1% en poids, et
a4) au moins un polyphényl-polyméthylène-polyisocyanate trifonctionnel à concurrence de 45 à 1% en poids.

8. Mélanges de polyisocyanates liquides contenant des groupes uréthane selon la revendication 6, que l'on obtient par la mise en réaction, rapportés au poids total, de
a) à concurrence de 76 à 95,5% en poids, un mélange (a) qui, quant à lui, rapportés au poids total du mélange (a), est constitué par
a1) du 4,4'-diphénylméthane-diisocyanate à concurrence de 45 à 65% en poids,
a2) du 2,4'-diphénylméthane-diisocyanate à concurrence de 10 à 50% en poids,
a3) du 2,2'-diphénylméthane-diisocyanate à concurrence de 0 à 1% en poids, et
a4) au moins un polyphényl-polyméthylène-polyisocyanate trifonctionnel à concurrence de 45 à 1% en poids, avec
b) à concurrence de 24 à 4,5% en poids, au moins un polyoxypropylène-polyol trifonctionnel possédant un indice d'hydroxyle de 20 à 60.
